# EUROPEAN PATENT APPLICATION

(11) **EP 2 148 545 A2**
(43) Date of publication of application: **27.01.2010**
(21) Application number: 09164823.8
(22) Date of filing: 07.07.2009
(51) Int. Cl.: H04W 72/00

(54) **Radio base station, mobile station, radio communication system and radio communication method**

(30) Priority: 25.07.2008 JP 2008191692
(71) Applicant: Fujitsu Ltd., Kawasaki-shi, Kanagawa 211-8588 (JP)
(72) Inventor: Sato, Naoto, Kawasaki-shi Kanagawa 211-8588 (JP)
(74) Representative: Wilding, Frances Ward

(57) **Abstract**

A radio base station for communicating with a mobile station using a radio frame includes a receiver which receives a predetermined code from the mobile station using a predetermined region of the radio frame, and a transmitter which, when the receiver receives the predetermined code, broadcasts structure information indicating a structure of the radio frame.

## Description

### FIELD

The embodiments discussed herein are related to a radio base station, a mobile station, a radio communication system, and a radio communication method and, more particularly, to a radio base station, a mobile station, a radio communication system, and a radio communication method for performing communication using, for example, a radio frame.

### BACKGROUND

In a field of mobile communication, Point-to-MultiPoint (PMP) communication systems are frequently used in which one radio base station is capable of simultaneously communicating with a plurality of mobile stations. Mobile WiMAX (Worldwide Interoperability for Microwave Access) as a next-generation mobile communication system recently discussed uses an OFDMA (Orthogonal Frequency Division Multiple Access) system as a communication system for realizing a Point-to-MultiPoint radio communication.

In the Point-to-MultiPoint mobile communication system, communication is controlled on a radio base station side. A radio base station performs centralized management of allocation of radio resources used for the communication with mobile stations. Here, the radio base station manages the radio resources in units of radio frames of a predetermined period obtained by dividing the radio resources on the frequency axis and the time axis. A basic structure (various timings, frame lengths, and modulation coding schemes) of the radio frame may differ among the radio base stations that manage the basic structure. Therefore, it is desired that the mobile station recognizes the basic structure of the radio frame managed by the radio base station as a communication partner and then performs data communication.

At the same time, it is considered that the radio base station periodically broadcasts (broadcast transmits) structure information (channel descriptor) indicating the basic structure of the radio frame. More specifically, the following case is considered. In Mobile WiMAX, the radio frame is divided on the time axis to have a DL (Down Link) sub-frame and an UL (Up Link) sub-frame. In this case, the channel descriptors used are a DCD (Downlink Channel Descriptor) indicating a structure of the DL sub-frame and a UCD (Uplink Channel Descriptor) indicating a structure of the UL sub-frame. Then, the radio base station periodically (e.g., at intervals of ten seconds) broadcasts these channel descriptors.

The mobile station receives the channel descriptor periodically broadcasted from the radio base station, for example, during start-up of the mobile station. Then, the mobile station recognizes a frame structure by the channel descriptor and establishes a connection with the radio base station based on the frame structure (Ranging process). Specifically, the mobile station recognizes the basic structure of the radio frame in the radio base station by the periodically broadcasted channel descriptor and then starts the ranging process. After completion of the ranging process, the radio base station and the mobile station are allowed to start an exchange of user data.

It is considered a case where the channel descriptor recognized by the mobile station does not match the channel descriptor managed by the radio base station as the current communication partner. Therefore, a conventional method inserts a count value indicating a version of a channel descriptor into information (DL-MAP information) indicating an allocation result, to each mobile station, of resources in a DL sub-frame supplied frame by frame, and notifies the mobile station of an update state of the channel descriptor (e.g., Published Japanese translation of a PCT application No. 2007-511975).

The channel descriptor contains a large amount of data. Therefore, a method of periodically broadcasting the channel descriptor has the following problems.
Specifically, when a broadcasting interval is short, radio resources are strained. Meanwhile, when the broadcasting interval is long, the mobile station waits for the next broadcast timing of the channel descriptor even when desiring to start a ranging process and as a result, delay may occur.

### SUMMARY

In view of the foregoing, it is desirable to provide a radio base station, a mobile station, a radio communication system and a radio communication method, in which structure information of a radio frame can be effectively exchanged.

According to one aspect of the embodiments, a radio base station for communicating with a mobile station using a radio frame includes: a receiver which receives a predetermined code from the mobile station using a predetermined region of the radio frame; and a transmitter which broadcasts structure information indicating a structure of the radio frame when the receiver receives the predetermined code.

### BRIEF DESCRIPTION OF DRAWINGS

Preferred features of the present invention will now be described, purely by way of example, with reference to the accompanying drawings, in which:
FIG. 1 outlines a radio communication system according to the present embodiment;
FIG. 2 illustrates a system configuration of the radio communication system;
FIG. 3 is a block diagram of a radio base station according to the present embodiment;
FIG. 4 is a block diagram of a mobile station according to the present embodiment;
FIG. 5 illustrates a structure of a radio frame;
FIG. 6 illustrates an example of a circuit of a code generator;
FIG. 7 is a flowchart illustrating a procedure of a ranging process on the base station;
FIG. 8 is a flowchart illustrating a procedure of a ranging process on the mobile station;
FIG. 9 is a sequence diagram illustrating a flow of messages during start-up of the mobile station;
FIG. 10 is a sequence diagram illustrating a flow of messages during handover;
FIG. 11 is a sequence diagram illustrating another flow of messages during handover; and
FIG. 12 is a sequence diagram illustrating a flow of messages at the time of changing of a channel descriptor.

### DESCRIPTION OF EMBODIMENTS

Embodiments of the present invention will be described in detail below with reference to the accompanying drawings, wherein like reference numerals refer to like elements throughout.

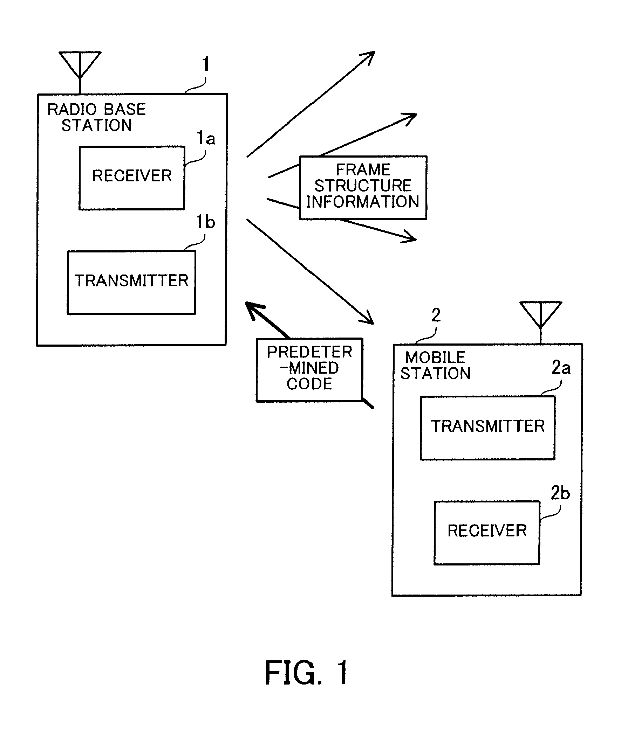

FIG. 1 outlines a radio communication system according to the present embodiment. This radio communication system has a radio base station 1 and a mobile station 2. The radio base station 1 is a communication device for performing radio communication with the mobile station 2. The radio base station 1 and the mobile station 2 perform communication using a radio frame obtained by dividing radio resources along a predetermined frequency domain and a predetermined time domain. The radio frame is managed by the radio base station 1. The radio base station 1 has a receiver 1a and a transmitter 1b.

The receiver 1a receives a predetermined code from the mobile station 2 using a predetermined region of the radio frame.

The transmitter 1b broadcasts, when the receiver 1a receives the predetermined code, a channel descriptor as structure information of the radio frame.

The mobile station 2 is a radio terminal equipment capable of performing radio communication with the radio base station 1. The mobile station 2 communicates with the radio base station 1 using resources within the radio frame allocated by the radio base station 1. The mobile station 2 has a transmitter 2a and a receiver 2b.

The transmitter 2a transmits a predetermined code to the radio base station 1 using a predetermined region of the radio frame.

The receiver 2b receives a channel descriptor broadcasted in response to the predetermined code transmitted by the transmitter 2a, which indicates a structure of the radio frame.

The radio frame has a predetermined region used for the mobile station 2 to transmit the predetermined code. This predetermined region previously obtains an agreement between the radio base station 1 and the mobile station 2. Specifically, even if obtaining no channel descriptor, the mobile station 2 can transmit the predetermined code to the radio base station 1 using at least resources of the predetermined region.

According to the above-described radio communication system, the radio base station 1 broadcasts the channel descriptor in response to the predetermined code from the mobile station 2. Therefore, the mobile station 2 can request the channel descriptor if necessary and start a ranging process. Further, the radio base station 1 broadcasts no channel descriptor except when the mobile station 2 requests a channel descriptor containing a large amount of data. Therefore, overhead for the radio resources can be reduced as compared with a conventional method of periodically broadcasting the channel descriptor. At the same time, delay that may occur before the start of the ranging process can be prevented.

That is, efficient communication can be performed without straining the radio resources and while suppressing delay.

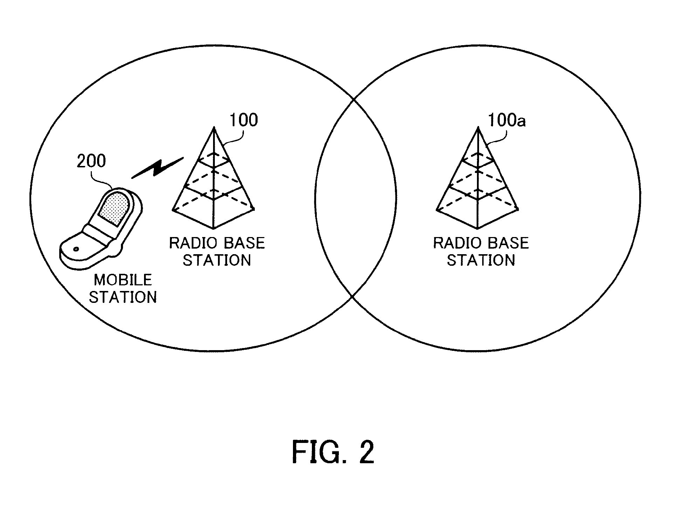

FIG. 2 illustrates a system configuration of the radio communication system. This radio communication system has radio base stations 100 and 100a, and a mobile station 200.

The radio base stations 100 and 100a are communication devices for performing radio communication with a plurality of mobile stations within the cells of the radio base stations 100 and 100a.

The mobile station 200 is located within the cell of the radio base station 100, and is a radio terminal equipment capable of performing radio communication with the radio base station 100, such as a portable telephone. The mobile station 200, when having user data and control messages for transmission, transmits the user data and control messages using radio resources allocated by the radio base station 100. Further, the mobile station 200, when detecting that received signals from the radio base station 100 contain user data and control messages to the mobile station 200, extracts and loads the user data and the control messages.

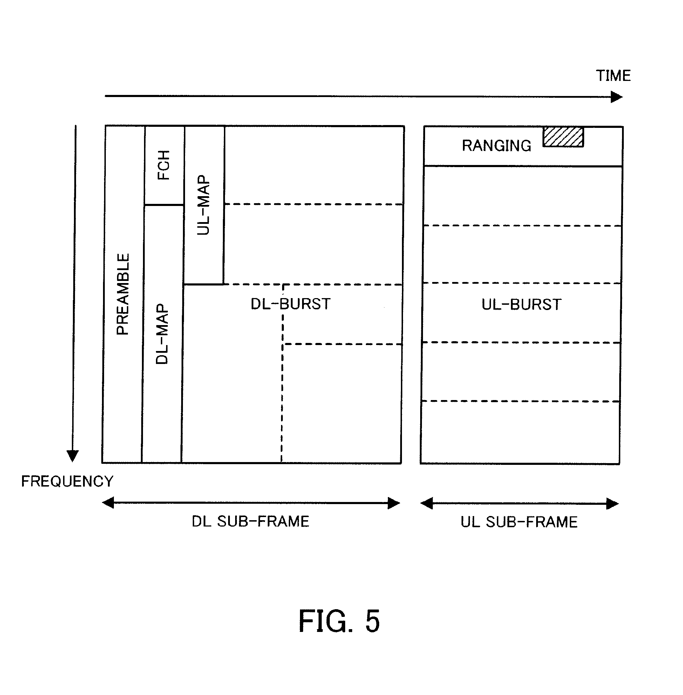

A communication method used in this radio communication system is, for example, Orthogonal Frequency Division Multiple Access (OFDMA) system. A duplex operation used is Time Division Duplex (TDD). In this case, the radio frame includes a DL sub-frame as the time domain for the data transmission to the mobile station 200 and a UL sub-frame as the time domain for the data reception from the mobile station 200. Structures of the DL/UL sub-frames will be described in detail with reference to FIG. 5. The basic structures of the DL/UL sub-frames are notified to the mobile station 200 when the radio base station 100 broadcasts DCD/UCD as channel descriptors in the cell of the radio base station 100.

Further, the mobile station 200, when performing a ranging process with the radio base station 100, transmits a ranging code using resources in a region referred to as a ranging region allocated within the radio frame. Ranging codes corresponding to a plurality of ranging processes are previously specified. The mobile station 200 generates the ranging codes corresponding to individual ranging processes and transmits the generated ranging codes to the radio base station 100. The radio base station 100 starts a ranging process according to the received predetermined ranging code.

Hereinafter, configurations of the radio base station 100 and the mobile station 200 will be described. The configuration of the radio base station 100a is the same as that of the radio base station 100.

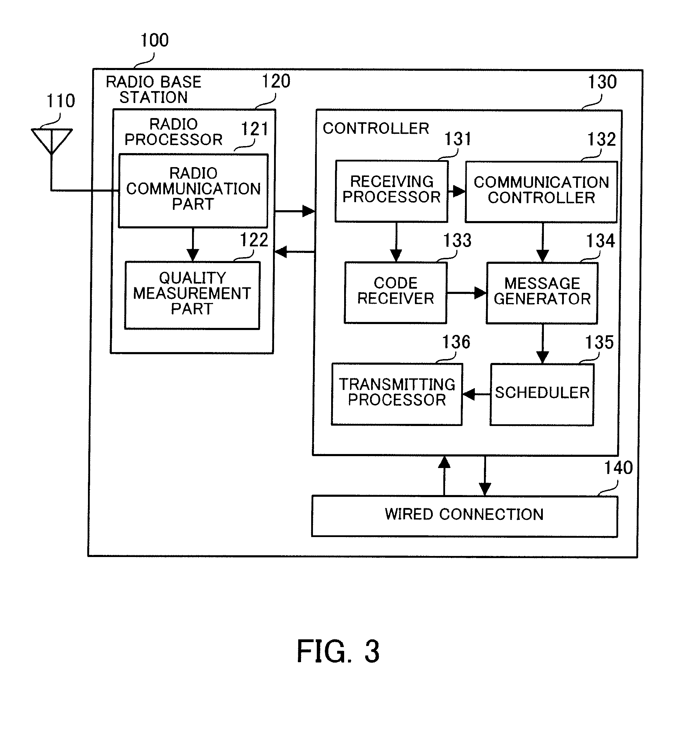

FIG. 3 is a block diagram illustrating the radio base station 100. The radio base station 100 has an antenna 110, a radio processor 120, a controller 130, and a wired connection 140.

The antenna 110 is a transmission-reception shared antenna. The antenna 110 wirelessly outputs a transmission signal obtained from the radio processor 120. Further, the antenna 110 receives a radio signal and outputs the received signal to the radio processor 120.

The radio processor 120 frequency-converts a baseband signal obtained from the controller 130 to a transmission signal and outputs the resultant transmission signal to the antenna 110. Further, the radio processor 120 frequency-converts a reception signal from the antenna 110 to a baseband signal and outputs the resultant baseband signal to the controller 130. Further, the radio processor 120 measures the quality of the reception signal and outputs the measurement results to the controller 130. The radio processor 120 has a radio communication part 121 and a quality measurement part 122.

The radio communication part 121 converts the frequency of the reception signal obtained from the antenna 110 from a Radio Frequency (RF) band to a baseband frequency to obtain a baseband signal, and outputs the baseband signal to the controller 130. Further, the radio communication part 121 outputs the reception signal to the quality measurement part 122. Further, the radio communication part 121 converts a baseband signal obtained from the controller 130 to an RF band signal to generate a transmission signal, and outputs the transmission signal to the antenna 110.

The quality measurement part 122 measures uplink radio quality such as a received power level based on the signal obtained from the radio communication part 121. The quality measurement part 122 outputs quality measurement results to the controller 130.

The controller 130 controls the ranging processes according to the ranging codes obtained from the mobile station 200 and controls an exchange of user data with the mobile station 200. The controller 130 has a receiving processor 131, a communication controller 132, a code receiver 133, a message generator 134, a scheduler 135, and a transmitting processor 136.

When obtaining the baseband signal from the radio processor 120, the receiving processor 131 extracts a signal in the ranging region within the radio frame and outputs the signal to the code receiver 133. Further, the receiving processor 131 demodulates and decodes the obtained baseband signal. Then, the receiving processor 131 outputs data obtained by the demodulation and decoding to the communication controller 132.

The communication controller 132 controls transmitting and receiving processes in the radio base station 100. The communication controller 132 extracts a control message and user data from the data obtained from the receiving processor 131. Here, the control message from the mobile station 200 includes, for example, transmitted power level information and quality measurement results. Then, the communication controller 132 instructs the message generator 134 to generate a control message to the mobile station 200 based on the extracted control message and the quality measurement results obtained from the quality measurement part 122. Further, the communication controller 132 outputs the extracted user data to the wired connection 140. Further, the communication controller 132 obtains, from the wired connection 140, the user data to be transmitted to the mobile station 200. The communication controller 132 notifies the scheduler 135 of an acquisition state of the user data (in FIG. 3, a connecting line is omitted). Further, the communication controller 132 outputs the obtained user data to the transmitting processor 136 (in FIG. 3, a connecting line is omitted).

The code receiver 133 compares a signal in the ranging region obtained from the receiving processor 131 with a plurality of predetermined ranging codes and determines a ranging code using the obtained signal. Further, the code receiver 133 measures a received power level, an uplink radio quality, and a reception timing based on the obtained signal. Then, the code receiver 133 notifies the message generator 134 of the determination results of the ranging code and various measurement results.

The message generator 134 generates the control message based on the ranging code information obtained from the code receiver 133 and the instruction from the communication controller 132. The control message generated here includes, for example, adjustment instructions of the received power level or reception timing based on the quality measurement results of the code receiver 133. Further, the control message may include requests for the transmitted power level information or for the quality measurement result of the mobile station 200, and include adjustment instructions based on the quality measurement results obtained from the quality measurement part 122 according to need such as the ranging process. The message generator 134, when the basic structure of the radio frame is changed, updates a DCD or UCD as the channel descriptor indicating the basic structure. Then, the message generator 134 outputs the generated control message to the scheduler 135. The message generator 134 determines the number of transmissions of the DCD or UCD according to the received ranging code. Further, the message generator 134 notifies the scheduler 135 of the ranging code information obtained from the code receiver 133 and the instruction from the communication controller 132.

The scheduler 135 controls allocation of uplink radio resources (UL sub-frame) based on the notification from the message generator 134 to generate UL-MAP information indicating allocation results. Further, the scheduler 135 controls allocation of downlink radio resources (DL sub-frame) based on the acquisition state of the user data by the communication controller 132 to generate DL-MAP information indicating allocation results.

Further, the scheduler 135, when receiving a predetermined ranging code from the mobile station 200, allocates the DCD or UCD to a predetermined region within the DL sub-frame. When the message generator 134 updates the DCD, the scheduler 135, for example, counts up a DCD count value contained in the DL-MAP information. Similarly, when the message generator 134 updates the UCD, the scheduler 135, for example, counts up a UCD count value contained in the UL-MAP information. This count value allows the radio base station 100 to notify the mobile station 200 of an update state of the DCD/UCD. The scheduler 135 outputs the generated DL/UL-MAP information to the transmitting processor 136.

The transmitting processor 136 generates radio frame data as a protocol data unit (PDU) in a radio interval using the DL/UL-MAP information obtained from the scheduler 135, the next transmitted user data obtained from the communication controller 132, and DCD/UCD. Then, the transmitting processor 136 encodes and modulates the generated radio frame data to generate a baseband signal, and outputs the generated baseband signal to the radio processor 120.

The wired connection 140 is a network interface for exchanging data with a superordinate station or another radio communication apparatus. The wired connection 140 transmits the data obtained from the communication controller 132 to a network side. Further, the wired connection 140 outputs the data supplied from the network side to the communication controller 132.

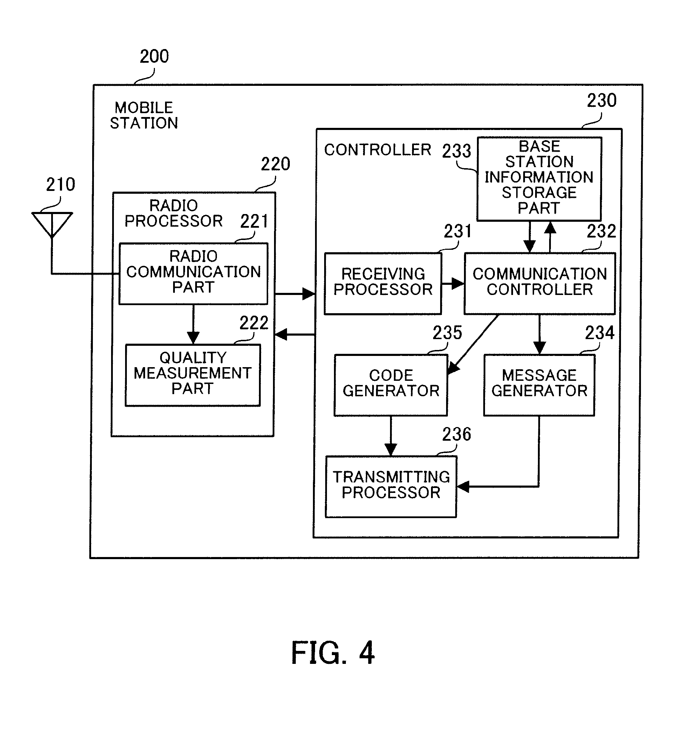

FIG. 4 is a block diagram illustrating the mobile station 200. The mobile station 200 has an antenna 210, a radio processor 220, and a controller 230.

The antenna 210 is a transmission-reception shared antenna. The antenna 210 wirelessly outputs a transmission signal obtained from the radio processor 220. Further, the antenna 210 receives a radio signal and outputs the received signal to the radio processor 120.

The radio processor 220 frequency-converts a baseband signal obtained from the controller 230 to a transmission signal and outputs the resultant transmission signal to the antenna 210. Further, the radio processor 220 frequency-converts a reception signal obtained from the antenna 210 to a baseband signal and outputs the resultant baseband signal to the controller 230. Further, the radio processor 220 measures the quality of the reception signal and outputs the measurement results to the controller 230. The radio processor 220 has a radio communication part 221 and a quality measurement part 222.

The radio communication part 221 converts the frequency of the reception signal obtained from the antenna 210 from a Radio Frequency band to a baseband to obtain a baseband signal, and outputs the baseband signal to the controller 230. Further, the radio communication part 221 outputs the reception signal to the quality measurement part 222 according to need. Further, the radio communication part 221 converts the baseband signal obtained from the controller 230 to the RF band signal to generate a transmission signal, and outputs the transmission signal to the antenna 210.

The quality measurement part 222 measures uplink radio quality such as a received power level or reception timing of the reception signal based on the signal obtained from the radio communication part 221. The quality measurement part 222 outputs radio quality measurement results to the controller 230.

The controller 230 controls a ranging process or exchange of user data with the radio base station 100. The controller 230 has a receiving processor 231, a communication controller 232, a base station information storage part 233, a message generator 234, a code generator 235, and a transmitting processor 236.

The receiving processor 231 demodulates and decodes the baseband signal obtained from the radio processor 220 to obtain the DCD/UCD, and the control message and user data to the mobile station 200 based on the DL-MAP information contained in the radio frame. The receiving processor 231 outputs the obtained data such as DCD, or UL-MAP information to the communication controller 232.

The communication controller 232 stores the DCD/UCD obtained from the receiving processor 231 in the base station information storage part 233. When exchanging data, the communication controller 232 refers to the DCD or UCD, if necessary, to grasp a basic structure such as a frame length of the radio frame, and notifies the receiving processor 231 and the transmitting processor 236 of the basic structure. Further, according to the control message obtained from the receiving processor 231, the communication controller 232 adjusts a transmitted power level and transmission timing based on the instruction from the radio base station 100 as well as instructs the message generator 234 to generate a control message. Further, the communication controller 232 outputs the UL-MAP information obtained from the receiving processor 231 to the transmitting processor 236.

The communication controller 232 instructs the code generator 235 to generate, if necessary, a ranging code for starting the ranging process. The timing of generating the ranging code is, for example, a time of performing network entry to the radio base station 100 during start-up of the mobile station 200. Another timing is a time of detecting update of the DCD/UCD stored in the base station information storage part 233. This update can be grasped in reference to the DCD count value contained in the DL-MAP information and the UCD count value contained in the UL-MAP information. The communication controller 232 instructs the code generator 235 to generate the ranging codes corresponding to individual ranging processes.

The base station information storage part 233 stores the DCD/UCD of the radio base stations 100 and 100a.

The message generator 234 generates the control message based on the instruction from the communication controller 232. The control message generated here includes an acknowledgement of reception of the user data, and the current transmitted power level and quality measurement results. The message generator 234 outputs the generated control message to the transmitting processor 236.

The code generator 235 generates a ranging code based on the instruction from the communication controller 232. The code generator 235 outputs the generated ranging code to the transmitting processor 236.

The transmitting processor 236 generates a radio frame data using the UL-MAP information obtained from the communication controller 232 and the control message obtained from the message generator 234. The radio frame data may include the user data to be transmitted to the radio base station 100. Then, the transmitting processor 236 encodes and modulates the generated radio frame data to generate a baseband signal, and outputs the generated baseband signal to the radio processor 220.

Further, the transmitting processor 236 associates the ranging code obtained from the code generator 235 with a signal in the ranging region within the radio frame, and outputs the resulting ranging code to the radio processor 220.

FIG. 5 illustrates a structure of the radio frame.
The radio frame illustrated in FIG. 5 is used for the radio communication between the radio base station 100 and the mobile station 200. Here, the radio communication system according to the present embodiment realizes full-duplex communication using the TDD system. Specifically, one radio frame is divided into two time domains. The first time domain is defined as the DL sub-frame for the downlink communication, and the second time domain is defined as the UL sub-frame for the uplink communication. Structures of the DL sub-frame and the UL sub-frame are notified to the mobile station 200 by the DCD/UCD.

The DL sub-frame starts with a preamble region for identifying a segment in the radio frame. A predetermined preamble signal is transmitted using this preamble region. The preamble region is followed by a frame control header (FCH) region indicating a frame prefix, and a DL-MAP region for transmitting the DL-MAP information of the radio frame. The mobile station side recognizes the FCH so as to recognize the subsequent DL-MAP region. The DL-MAP region is followed by a DL-Burst region. Here, a part of the DL-Burst region is allocated as a UL-MAP region for transmitting UL-MAP information. The remaining DL-Burst region is allocated as a region for transmitting the user data or control messages to each mobile station. An allocation state of the DL-Burst region is described in the DL-MAP information. A resource region for transmitting the DCD/UCD is allocated to a part of the DL-Burst region, if necessary. The DL-MAP information also includes such allocation information of the DCD/UCD.

The UL sub-frame includes a ranging region for transmitting a ranging code. In the ranging region, the mobile station 200 is allowed to transmit the ranging code without permission of the radio base station 100. A part of the ranging region is allocated as a region reserved for the transmission of the ranging code. This reserved region previously obtains an agreement between the radio base station 100 and the mobile station 200. Specifically, even if obtaining no UCD, the mobile station 200 can transmit, if necessary, the ranging code using the reserved region. The remaining UL sub-frame is allocated as a UL-Burst region to transmit the user data or control messages to the radio base station 100. An allocation state of the UL-Burst region is described in the UL-MAP information.

Between the DL sub-frame and the UL sub-frame, a Tx/Rx transition time gap (TTG) is placed. Between the UL sub-frame and the DL sub-frame of the next radio frame, a Rx/Tx transition time gap (RTG) is placed.

In the radio frame, resources on the frequency axis are managed in units referred to as sub-channels, each of which is a bundle of a predetermined number of subcarriers. Further, resources on the time axis are managed in units referred to as symbols. Then, the resource allocation to each of a plurality of mobile stations as communication objects including the mobile station 200 is performed in units of regions referred to as slots, each of which includes one sub-channel in the frequency domain and the predetermined number of symbols (e.g., three symbols) in the time domain.

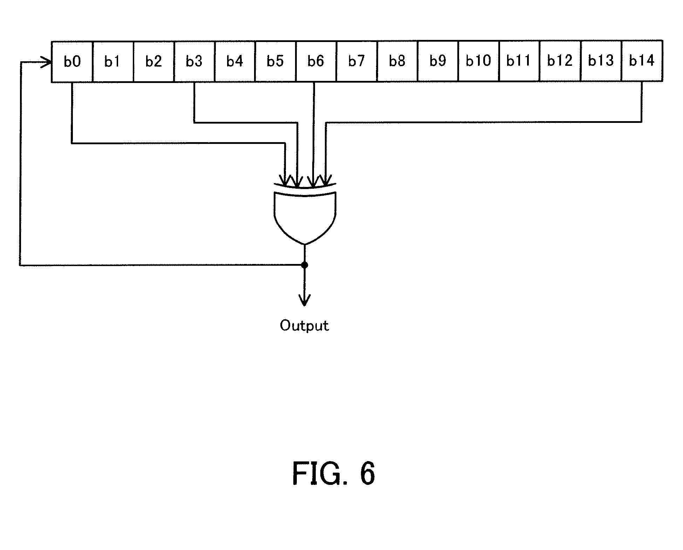

FIG. 6 illustrates a circuit example of the code generator 235. The code generator 235 can generate the ranging code using a pseudo random binary sequence (PRBS) generator. The PRBS generator uses, for example, a 15-bit PRBS seed set in a shift register and indicated by the bits b0 to b14. Here, the bit b0 is the least significant bit (LSB), and the bit b14 is the most significant bit (MSB). The bits b0 to b6 are referred to as an uplink permutation base (UL_PermBase). Among these bits, the bits b0, b3, b6, and b14 are subjected to an exclusive OR operation. Then, the results of the exclusive OR operation are outputted and at the same time, are inputted to the bit b0 as the LSB of the shift register. Each of the bits b1 to b14 is shifted to the next higher bit.

Suppose, here, that the length of each ranging code is 144 bits and the number of available codes is 256. That is, different ranging codes each having a code length of 144 bits are grouped into 256 code sets. The 256 code sets are associated with the ranging codes corresponding to individual ranging processes. Examples of the ranging code that can be generated include an initial ranging code used during a network entry process performed at a start-up of the mobile station. In addition thereto, examples thereof include a periodic ranging code, a bandwidth request ranging code, and a handover ranging code. Further, the PRBS generator according to the present embodiment generates a channel descriptor request ranging code as a ranging code for requesting the transmission of the DCD/UCD.

In the PRBS generator, the 144-bit codes are classified based on the number of acquisitions to generate the ranging codes corresponding to individual ranging processes as described below. For example, the 144-bit code obtained by one generating process (namely, 144 logical operations) is one ranging code. A sub-group value S used below (S is an integer between 0 and 255) indicates an offset defining the number of acquisitions before the initial ranging code is generated.
(1) To the initial ranging codes (N codes), the 144-bit codes generated (144×(S+1) mod 256) times to (144×(S+N) mod 256) times are each allocated.
(2) To the periodic ranging codes (M codes), the 144-bit codes generated (144×(S+N+1) mod 256) times to (144×(S+N+M) mod 256) times are each allocated.
(3) To the bandwidth request ranging codes (L codes), the 144-bit codes generated (144×(S+N+M+1) mod 256) times to (144×(S+N+M+L) mod 256) times are each allocated.
(4) To the handover ranging codes (O codes), the 144-bit codes generated (144×(S+N+M+L+1) mod 256) times to (144×(S+N+M+L+O) mod 256) times are each allocated.
(5) To the channel descriptor request ranging codes (P codes), the 144-bit codes generated (144×(S+N+M+L+O+1) mod 256) times to (144×(S+N+M+L+O+P) mod 256) times are each allocated.

If several mobile stations simultaneously transmit the ranging codes generated from the same bit strings, collision may occur in the reserved region within the ranging region of the UL sub-frame. Therefore, it is desired to sufficiently secure the number of codes N (e.g., N≧10) available as the ranging code, for example, the initial ranging code transmitted using the reserved region. As a result, collision probability due to transmitting the same code can be reduced. Further, it is considered to set the subgroup value S to zero in order to sufficiently secure the number of codes available as the ranging code.

Next, processes performed in the radio communication system having the above-described configuration will be described in detail.

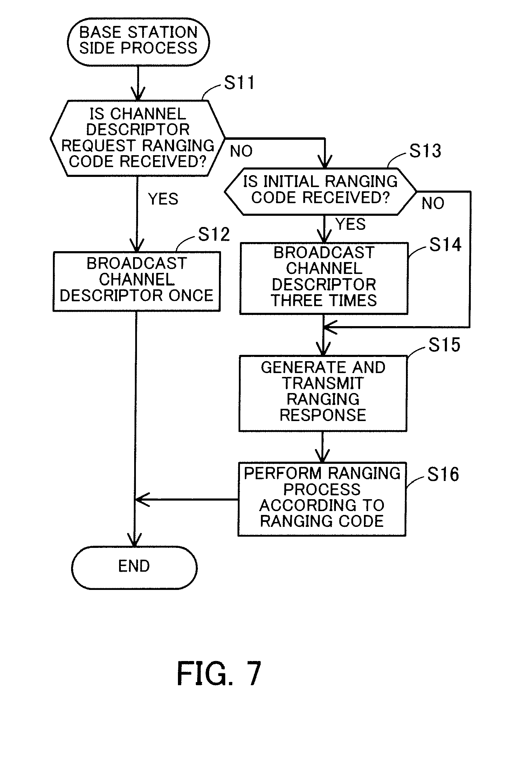

FIG. 7 is a flowchart illustrating a procedure of the ranging process on the base station side. Hereinafter, the processes illustrated in FIG. 7 will be described along the step numbers.

[Step S11] The message generator 134 determines whether a ranging code supplied from the mobile station 200 is a channel descriptor request ranging code. If YES, the process goes to step S12. If NO, the process goes to step S13.

[Step S12] The message generator 134 instructs the scheduler 135 once to incorporate the DCD/UCD into a DL sub-frame. Based on the instruction from the message generator 134, the scheduler 135 generates DL-MAP information indicating an allocation result of the DCD/UCD to a part of the DL-Burst within the DL sub-frame, and outputs the DL-MAP information to the transmission processor 136. The transmission processor 136 generates radio frame data including the DCD/UCD based on the DL-MAP information. Thereafter, the radio frame data including the DCD/UCD is transmitted once through the radio processor 120 and the antenna 110.

[Step S13] The message generator 134 determines whether a ranging code supplied from the mobile station 200 is an initial ranging code. If YES, the process goes to step S14. If NO, the process goes to step S15.

[Step S14] The message generator 134 instructs the scheduler 135 three times to incorporate the DCD/UCD into the DL sub-frame according to the subsequent radio frame transmission interval. Based on the instruction from the message generator 134, the scheduler 135 generates, three times in all, the DL-MAP information indicating an allocation result of the DCD/UCD to a part of the DL-Burst within the DL sub-frame, and outputs the DL-MAP information to the transmission processor 136. The transmission processor 136 generates radio frame data including the DCD/UCD based on the instruction from the scheduler 135. Thereafter, the radio frame data including the DCD/UCD is transmitted three times through the radio processor 120 and the antenna 110. [Step S15] The message generator 134 receives a ranging code to generate a ranging response indicating a continuation of the ranging process. Thereafter, the generated ranging response is incorporated into the radio frame data, and transmitted to the mobile station 200 through the radio processor 120 and the antenna 110.

[Step S16] Based on a response from the mobile station 200, the communication controller 132 performs the ranging process according to the ranging code. Then, based on the instruction from the communication controller 132, the message generator 134 generates a control message such as a notification request for the transmitted power level, and notifies the mobile station 200 of the control message.

A timing of transmitting the DCD/UCD after receiving the predetermined ranging code may be a timing of transmitting the next radio frame data or may be a timing of transmitting the further subsequent radio frame data. When transmitting the DCD/UCD several times, the transmission period may be fixed (e.g., as frequent as every four frames) or may be variable. The number of transmissions is not limited to three times as in the above-described example of step S14, and may be once or optionally several times. It is also considered to determine the transmission period and the number of transmissions based on a resource available status in the DL-Burst region.

As described above, the radio base station 100 transmits the DCD/UCD according to the channel descriptor ranging code or initial ranging code obtained from the mobile station 200. Upon receipt of the initial ranging code, it is desired to transmit the DCD/UCD several times as illustrated at step S14 because, since communication of the mobile station 200 is in the start-up state, the mobile station 200 may fail in the receipt of the DCD/UCD.

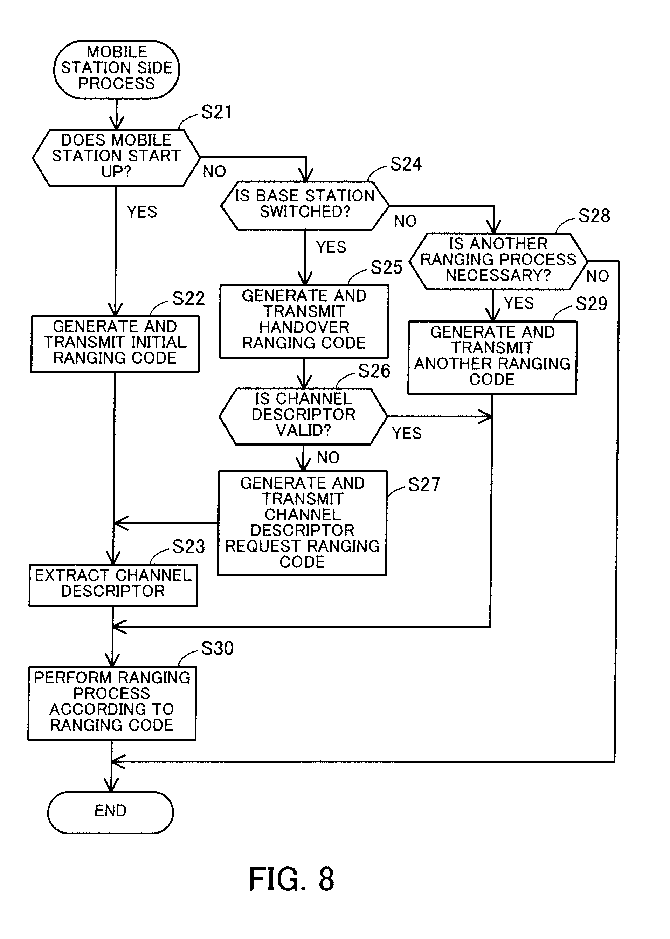

FIG. 8 is a flowchart illustrating a procedure of the ranging process on the mobile station side. Hereinafter, processes illustrated in FIG. 8 will be described along the step numbers.

[Step S21] The communication controller 232 determines whether the power of the mobile station 200 is turned on to cause the mobile station 200 to start up. If YES, the process goes to step S22. If NO, the process goes to step S24.

[Step S22] The communication controller 232 instructs the code generator 235 to generate an initial ranging code. The code generator 235 generates the initial ranging code based on the instruction from the communication controller 232. Then, the transmission processor 236 associates the initial ranging code generated by the code generator 235 with a signal in a reserved region within the ranging region, and transmits the resulting initial ranging code to the radio base station 100.

[Step S23] The communication controller 232 extracts the DCD/UCD from the signal supplied from the radio base station 100. The communication controller 232 can grasp a basic structure of the radio frame based on the extracted DCD/UCD. For example, the communication controller 232 can grasp the ranging region other than the reserved region within the UL sub-frame based on the UCD, so that the ranging region other than the reserved region can be used for the other subsequent ranging processes.

[Step S24] The communication controller 232 determines whether switching of the connection between the radio base stations (e.g., switching from the radio base station 100a to the radio base station 100) is caused by handover. If YES, the process goes to step S25. If NO, the process goes to step S28.

[Step S25] The communication controller 232 instructs the code generator 235 to generate a handover ranging code. The code generator 235 generates the handover ranging code based on the instruction from the communication controller 232. Then, in reference to the UCD stored in the base station information storage part 233, the transmission processor 236 associates the handover ranging code generated by the code generator 235 with a signal in the ranging region within the UL sub-frame, and transmits the resulting handover ranging code to the radio base station 100 as a handover destination.
Here, before the handover, the mobile station 200 previously obtains the DCD/UCD of the radio base station 100 as a neighbor advertisement (NBR-ADV) broadcasted from the base station 100a.

[Step S26] Based on the DCD count and the UCD count included in the DL/UL-MAP information currently transmitted from the radio base station 100, the communication controller 232 determines whether DCD/UCD information stored in the base station information storage part 233 is valid. If NO, the process goes to step S27. If YES, the process goes to step S30.

[Step S27] The communication controller 232 instructs the code generator 235 to generate a channel descriptor request ranging code. The code generator 235 generates the channel descriptor request ranging code based on the instruction from the communication controller 232. Then, the transmission processor 236 associates the channel descriptor request ranging code generated by the code generator 235 with a signal in the reserved region within the ranging region, and transmits the resulting channel descriptor request ranging code to the radio base station 100.

[Step S28] The communication controller 232 determines whether another ranging process (e.g., a band request ranging) is necessary. If YES, the process goes to step S29. If NO, the process is completed.

[Step S29] The communication controller 232 instructs the code generator 235 to generate a ranging code corresponding to another ranging process. The code generator 235 generates the another ranging code based on the instruction from the communication controller 232.
Then, in reference to the UCD stored in the base station information storage part 233, the transmission processor 236 associates the ranging code generated by the code generator 235 with a signal in the ranging region within the UL sub-frame, and transmits the resulting ranging code to the currently communicating radio base station 100.
Thereafter, the communication controller 232 completes the ranging process with the radio base station 100.

[Step S30] Based on the response from the radio base station 100, the communication controller 232 performs the ranging process according to the ranging code. Then, based on the instruction from the communication controller 232, the message generator 234 generates a control message such as a notification request for the transmitted power level, and informs the radio base station 100 of the control message.

As described above, the mobile station 200 transmits the initial ranging code and the channel descriptor request ranging code, if necessary, and obtains the DCD/UCD from the radio base station 100. Then, the mobile station 200 can start the ranging process based on the obtained DCD/UCD.

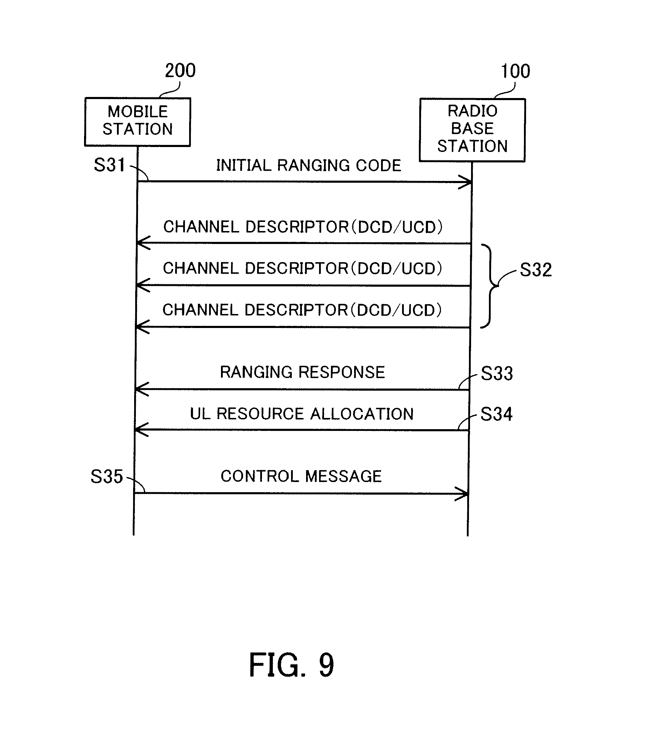

FIG. 9 is a sequence diagram illustrating a flow of messages during start-up of the mobile station. Hereinafter, processes illustrated in FIG. 9 will be described along the step numbers.

[Step S31] At the start-up, the mobile station 200 transmits an initial ranging code to the radio base station 100 using resources in the reserved region within the ranging region.

[Step S32] The radio base station 100 broadcasts the DCD/UCD three times at four frame intervals in response to the initial ranging code from the mobile station 200.

[Step S33] The radio base station 100 receives the initial ranging code from the mobile station 200, and transmits to the mobile station 200 a ranging response indicating a continuation of the ranging process. The ranging response includes a control message to the mobile station 200, such as an adjustment instruction of a transmitted power level and transmission timing.

[Step S34] The radio base station 100 generates a UL-MAP information indicating an allocation result, to the mobile station 200, of resources in the UL-Burst region within the UL sub-frame, and transmits the UL-MAP information to the mobile station 200.

[Step S35] Using the resources in the UL-Burst region allocated by the radio base station 100, the mobile station 200 generates a control message for responding to the control message included in the ranging response, and transmits the generated control message to the radio base station 100.

As described above, during start-up of the mobile station 200, an initial ranging process is started and the subsequent initial ranging processes are performed with the radio base station 100.

The number of transmissions and transmission interval of the DCD/UCD are not limited to the values illustrated at step S32, and are previously set to optional values as illustrated in the description of FIG. 7.

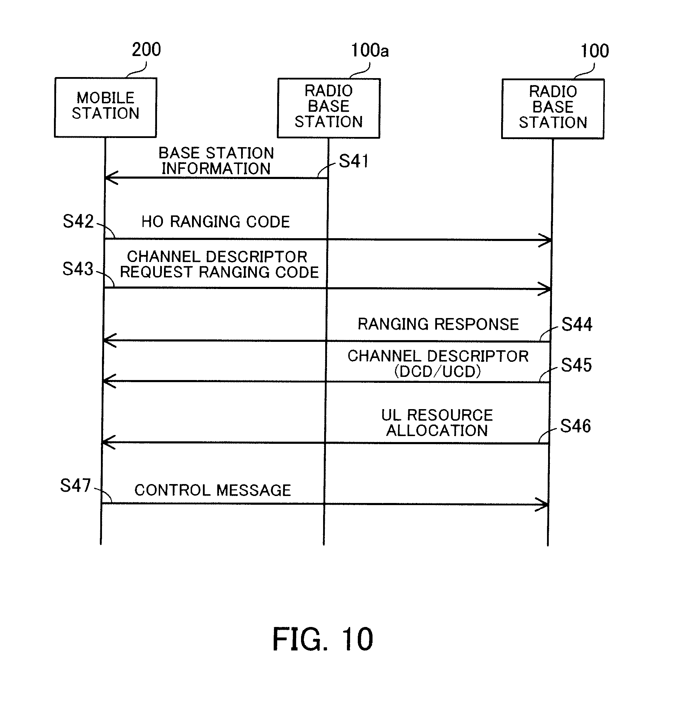

FIG. 10 is a sequence diagram illustrating a flow of messages during handover. Hereinafter, the processes illustrated in FIG. 10 will be described along the step numbers.

[Step S41] The radio base station 100a transmits the DCD/UCD of the radio base station 100 as an NBR-ADV to the mobile station 200.

[Step S42] Based on the UCD obtained at step S41, the mobile station 200 transmits a handover ranging code to the radio base station 100 using the ranging region within the UL sub-frame of the radio base station 100.

[Step S43] In reference to the DCD count value and UCD count value of the DL/UL-MAP information supplied from the radio base station 100, the mobile station 200 detects that the DCD/UCD obtained at step S41 is invalid. Then, the mobile station 200 transmits a channel descriptor request ranging code to the radio base station 100 using the reserved region within the ranging region.

[Step S44] The radio base station 100 receives the handover ranging code from the mobile station 200, and transmits to the mobile station 200 a ranging response indicating a continuation of the ranging process. The ranging response includes a predetermined control message for collecting information necessary for the handover ranging process.

[Step S45] The radio base station 100 broadcasts the DCD/UCD once in response to the channel descriptor request ranging code.

[Step S46] The radio base station 100 generates the UL-MAP information indicating an allocation result, to the mobile station 200, of resources in the UL-Burst region within the UL sub-frame, and outputs the UL-MAP information to the mobile station 200.

[Step S47] Using the resources in the UL-Burst region allocated by the radio base station 100, the mobile station 200 generates a control message for responding to the control message included in the ranging response, and transmits the generated control message to the radio base station 100.

As described above, during handover in the mobile station 200, a handover ranging process is started and the subsequent handover ranging processes are performed with the radio base station 100. At this time, even if the DCD/UCD is already updated and is a new DCD/UCD, the mobile station 200 can request an appropriate DCD/UCD to the radio base station 100.

FIG. 10 illustrates a case where the radio base station 100 succeeds in the receipt of the handover ranging code transmitted by the mobile station 200 based on the previously obtained DCD/UCD. However, it is considered a case where since the DCD/UCD is invalid, the handover ranging code transmitted without correct grasp of the ranging region is failed to be correctly supplied to the radio base station 100. This case will be described below.

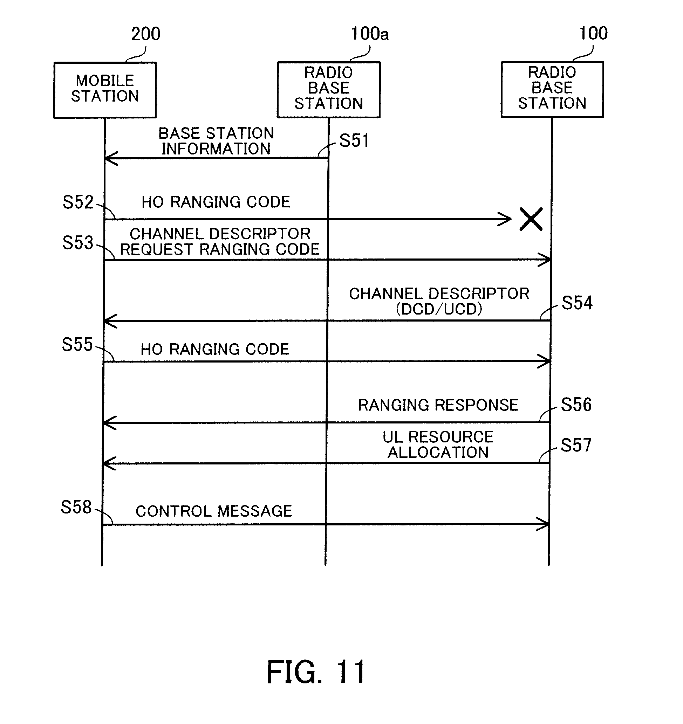

FIG. 11 is a sequence diagram illustrating another flow of messages during handover. Hereinafter, the processes illustrated in FIG. 11 will be described along the step numbers.

[Step S51] The radio base station 100a transmits the DCD/UCD of the radio base station 100 as an NBR-ADV to the mobile station 200.

[Step S52] Based on the UCD obtained at step S51, the mobile station 200 transmits a handover ranging code to the radio base station 100 using the ranging region within the UL sub-frame of the radio base station 100. However, herein, since the UCD obtained at step S51 is invalid for the radio base station 100, the handover ranging code fails to be correctly supplied to the radio base station 100. In reference to the DCD count value and UCD count value of the DL/UL-MAP information supplied frame by frame from the radio base station 100, the mobile station 200 recognizes that the DCD/UCD of the mobile station 200 is invalid.

[Step S53] The mobile station 200 further transmits a channel descriptor request ranging code to the radio base station 100 using the reserved region within the ranging region.

[Step S54] The radio base station 100 broadcasts the DCD/UCD once in response to the channel descriptor request ranging code. The mobile station 200 obtains the broadcasted valid DCD/UCD and discards the invalid DCD/UCD.

[Step S55] The mobile station 200 detects that a ranging response to the handover ranging code transmitted at step S52 fails to be supplied from the radio base station 100. Based on the UCD obtained at step S54, the mobile station 200 transmits again a handover ranging code to the radio base station 100 using the ranging region within the UL sub-frame of the radio base station 100.

[Step S56] The radio base station 100 receives the handover ranging code from the mobile station 200, and transmits to the mobile station 200 a ranging response indicating a continuation of the ranging process. The ranging response includes a predetermined control message for collecting information necessary for the handover ranging process.

[Step S57] The radio base station 100 generates the UL-MAP information indicating an allocation result, to the mobile station 200, of resources in the UL-Burst region within the UL sub-frame, and outputs the UL-MAP information to the mobile station 200.

[Step S58] Using the resources in the UL-Burst region allocated by the radio base station 100, the mobile station 200 generates a control message for responding to the control message included in the ranging response, and transmits the generated control message to the radio base station 100.

As described above, during handover in the mobile station 200, the handover ranging process is started and the subsequent handover ranging processes are performed with the radio base station 100. At this time, even if the DCD/UCD is already updated and is a new DCD/UCD, the mobile station 200 can request an appropriate DCD/UCD to the radio base station 100. When the handover ranging code fails to be supplied to the radio base station 100, the mobile station 200 transmits again the handover ranging code based on the new UCD. As a result, the handover ranging process can be surely started.

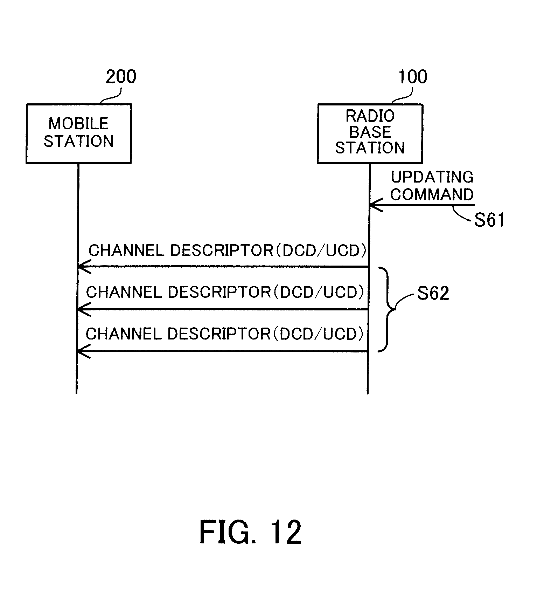

FIG. 12 is a sequence diagram illustrating a flow of messages at the time of changing a channel descriptor. Hereinafter, the processes illustrated in FIG. 12 will be described along the step numbers.

[Step S61] The radio base station 100 updates the DCD/UCD of the radio base station 100 in response to updating commands from the upper network or operations by a manager.

[Step S62] The radio base station 100 broadcasts the updated DCD/UCD three times at a predetermined period.

The number of transmissions and transmission period of the DCD/UCD are previously set to optional values.

The processes illustrated in FIGS. 11 and 12 are the same for the case where the mobile station 200 performs, using NBR-ADV, handover to a radio base station of which the DCD/UCD is not yet obtained. Further, the processes illustrated in FIGS. 11 and 12 are the same for a handover process when the mobile station 200 in an idle state performs network re-entry to the adjacent radio base station (changes standby base stations).

As described above, the radio base station 100 notifies the mobile station 200 within the cell of the radio base station 100 of update of the DCD/UCD, so that the mobile station 200 can communicate with the radio base station 100 using the DCD/UCD that is always valid.

As described above, according to the above-described radio communication system, the mobile station 200 generates a ranging code for requesting a channel descriptor, if necessary, and transmits the ranging code to the radio base station 100 as a communication partner. Then, the radio base station 100 broadcasts the channel descriptor in response to the ranging code from the mobile station 200. The mobile station 200 performs the subsequent ranging processes based on the obtained channel descriptor. Accordingly, the mobile station 200 can start the ranging process, if necessary. Further, the radio base station 100 broadcasts no channel descriptor except when the mobile station 200 requests a channel descriptor containing a large amount of data. Therefore, overhead for the radio resources can be reduced as compared with a conventional method of periodically broadcasting the channel descriptor. In addition, during startup of the mobile station 200, the initial ranging process can be quickly started without causing delay. That is, efficient communication can be performed without straining the radio resources and while suppressing delay.

According to the above-described radio base station, mobile station, radio communication system, and radio communication method, structure information of the radio frame can be effectively exchanged.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of embodiments of the invention. Although the embodiment(s) of the present invention has (have) been described in detail, it should be understood that various changes, substitutions and alterations could be made hereto without departing from the scope of the invention.

In any of the above aspects, the various features may be implemented in hardware, or as software modules running on one or more processors. Features of one aspect may be applied to any of the other aspects.

The invention also provides a computer program or a or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A radio base station for communicating with a mobile station using a radio frame, comprising:
a receiver which receives a predetermined code from the mobile station using a predetermined region of the radio frame; and
a transmitter which, when the receiver receives the predetermined code, broadcasts structure information indicating a structure of the radio frame.

2. The radio base station according to claim 1, wherein:
when the receiver receives a code indicating a request for the structure information as the predetermined code, the transmitter broadcasts the structure information.

3. The radio base station according to claim 1 or 2, wherein:
when the receiver receives as the predetermined code a code indicating network entry of the mobile station, the transmitter broadcasts the structure information.

4. The radio base station according to any of claims 1 to 3, wherein:
the transmitter broadcasts the structure information the number of times according to types of codes received as the predetermined code.

5. The radio base station according to any of claims 1 to 4, wherein:
when the structure of the radio frame is changed, the transmitter broadcasts structure information indicating the changed structure.

6. A mobile station for communicating with a radio base station using a radio frame, comprising:
a transmitter which transmits a predetermined code to the radio base station using a predetermined region of the radio frame; and
a receiver which receives structure information broadcasted from the radio base station in response to the predetermined code transmitted by the transmitter, the structure information indicating a structure of the radio frame.

7. The mobile station according to claim 6, wherein:
the radio frame contains information indicating a version of the structure of the radio frame; and
the transmitter transmits the predetermined code when a version corresponding to previously obtained structure information differs from that of a current radio frame.

8. The mobile station according to claim 6 or 7, wherein:
the transmitter transmits the predetermined code when a version corresponding to structure information of a handover destination radio base station differs from that of a current radio frame of the handover destination radio base station, the structure information being previously obtained from a handover source radio base station.

9. The mobile station according to any of claims 6 to 8, wherein:
the transmitter transmits the predetermined code when a version corresponding to structure information of a standby destination radio base station differs from that of a current radio frame of the standby destination radio base station, the structure information being previously obtained from a standby source radio base station.

10. The mobile station according to any of claims 6 to 9, wherein:
the receiver receives the structure information broadcasted after the transmitter transmits a code indicating network entry as the predetermined code.

11. A radio communication system for performing communication using a radio frame, comprising:
a radio base station including a first receiver which receives a predetermined code using a predetermined region of the radio frame, and a first transmitter which, when the first receiver receives the predetermined code, broadcasts structure information indicating a structure of the radio frame; and
a mobile station including a second transmitter which transmits the predetermined code to the radio base station using the predetermined region, and a second receiver which receives the structure information broadcasted from the radio base station in response to the predetermined code transmitted by the second transmitter.

12. A radio communication method in a radio communication system comprising a radio base station and a mobile station communicating with each other using a radio frame, the method comprising:
causing the mobile station to transmit a predetermined code to the radio base station using a predetermined region of the radio frame;
causing the radio base station to receive the predetermined code from the mobile station using the predetermined region;
causing the radio base station to broadcast, when receiving the predetermined code, structure information indicating a structure of the radio frame; and
causing the mobile station to receive the structure information broadcasted from the radio base station in response to the transmitted predetermined code.
